# EUROPEAN PATENT APPLICATION

(11) **EP 4 633 209 A1**
(43) Date of publication of application: **15.10.2025**
(21) Application number: 22967627.5
(22) Date of filing: 09.12.2022
(51) Int. Cl.: H04W 4/70, H04W 72/02

(54) **COMMUNICATION METHODS, TERMINAL DEVICES, AND COMMUNICATION DEVICES**

(71) Applicant: GUANGDONG OPPO MOBILE TELECOMMUNICATIONS CORP., LTD., Dongguan, Guangdong 523860 (CN)
(72) Inventor: DU, Zhongda, Dongguan, Guangdong 523860 (CN)
(74) Representative: Mewburn Ellis LLP
(86) International application number: PCT/CN2022/137928
(87) International publication number: WO 2024/119479

(57) **Abstract**

A communication method, a terminal device, and a communication device are provided. The method includes the following. A terminal device determines whether to autonomously perform radio resource selection; and in a case where the terminal device autonomously performs radio resource selection, the terminal device transmits data and/or buffer data information based on a first radio resource autonomously selected by the terminal device. Based on the disclosure, whether to autonomously perform radio resource selection is determined by the terminal device itself. In some cases, the terminal device may determine to autonomously perform radio resource selection, allowing the terminal device to acquire a resource(s) for data transmission without introducing additional delay. In some cases, the terminal device may determine not to autonomously perform radio resource selection, and a scheduler may schedule the terminal device to allocate a radio resource(s) dedicated to the terminal device, thereby avoiding resource conflicts or resource wastage.

## Description

### TECHNICAL FIELD

This disclosure relates to the field of communication technology, and in particularly, to a communication method, a terminal device, and a communication device.

### BACKGROUND

In the related art, radio resources can be scheduled for terminal devices, so that the terminal device can transmit data. However, various issues exist. For example, issues such as relatively long user-plane delay, radio resource wastage, and resource conflicts may occur.

### SUMMARY

The disclosure provides a communication method, a terminal device, and a communication device. Various aspects involved in the disclosure will be introduced below.

In a first Aspect, a communication method is provided. The method includes the following. A terminal device determines whether to autonomously perform radio resource selection; and in a case where the terminal device autonomously performs radio resource selection, the terminal device transmits data and/or buffer data information based on a first radio resource autonomously selected by the terminal device.

In a second aspect, a communication method is provided. The method includes the following. In a case where the terminal device autonomously performs radio resource selection, based on a first radio resource autonomously selected by the terminal device, a communication device receives data and/or buffer data information transmitted by the terminal device, where whether the terminal device autonomously performs radio resource selection is determined by the terminal device.

In a third aspect, a terminal device is provided. The terminal device includes a first determining unit configured to determine whether to autonomously perform radio resource selection; and a first transmitting unit configured to transmit data and/or buffer data information based on a first radio resource autonomously selected by the terminal device, in a case where the terminal device autonomously performs radio resource selection.

In a fourth aspect, a communication device is provided. The communication device includes a first receiving unit configured to receive data and/or buffer data information transmitted by a terminal device based on a first radio resource autonomously selected by the terminal device, in a case where the terminal device autonomously performs radio resource selection, where whether the terminal device autonomously performs radio resource selection is determined by the terminal device.

In a fifth aspect, a terminal device is provided. The terminal device includes a processor and a memory. The memory is configured to store one or more computer programs. The processor is configured to invoke the computer programs stored in the memory to cause the terminal device to execute some or all of the steps in the method of the first aspect.

In a sixth aspect, a communication device is provided. The communication device includes a processor and a memory. The memory is configured to store one or more computer programs. The processor is configured to invoke the computer programs stored in the memory to cause the communication device to execute some or all of the steps in the method of the second aspect.

In a seventh aspect, a communication system is provided in the embodiments of the disclosure. The system includes the above-described terminal device and/or communication device. In another possible design, the system may further include other devices that can interact with the terminal device or communication device in the solutions provided in the embodiments of the disclosure.

In an eighth aspect, a computer-readable storage medium is provided in the embodiments of the disclosure. The computer-readable storage medium stores a computer program thereon, and the computer program is configured to cause a terminal to execute some or all of the steps in each of the methods described in the above aspects.

In a ninth aspect, a computer program product is provided in the embodiments of the disclosure. The computer program product includes a non-transitory computer-readable storage medium storing a computer program. The computer program is operable to cause a terminal device to execute some or all of the steps in each of the methods described in the above aspects. In some embodiments, the computer program product may be a software installation package.

In a tenth aspect. a chip is provided in the embodiments of the disclosure. The chip includes a memory and a processor. The processor is configured to invoke and run a computer program from the memory to implement some or all of the steps of each of the methods of the above aspects.

Based on the disclosure, whether to autonomously perform radio resource selection is determined by the terminal device itself. In some cases, the terminal device may determine to autonomously perform radio resource selection, allowing the terminal device to acquire a resource(s) for data transmission without introducing additional delay. In some cases, the terminal device may determine not to autonomously perform radio resource selection, and a scheduler may schedule the terminal device to allocate a radio resource(s) dedicated to the terminal device, thereby avoiding resource conflicts or resource wastage.

### BRIEF DESCRIPTION OF THE DRAWINGS

FIG. 1 is a schematic diagram of a wireless communication system to which embodiments of the disclosure are applicable.
FIG. 2 is a schematic diagram of another wireless communication system to which embodiments of the disclosure are applicable.
FIG. 3 is an exemplary diagram illustrating a method for allocating a resource(s) to a terminal device.
FIG. 4 is a schematic flow chart of a communication method provided in embodiments of the disclosure.
FIG. 5 is a schematic flow chart of another communication method provided in embodiments of the disclosure.
FIG. 6 is a schematic flow chart of yet another communication method provided in embodiments of the disclosure.
FIG. 7 is a schematic structural diagram of a terminal device provided in embodiments of the disclosure.
FIG. 8 is a schematic structural diagram of a communication device provided in embodiments of the disclosure.
FIG. 9 is a schematic structural diagram of a device for communication provided in embodiments of the disclosure.

### DETAILED DESCRIPTION

Below, the technical solutions of the disclosure will be described in conjunction with the accompanying drawings.

### Communication System

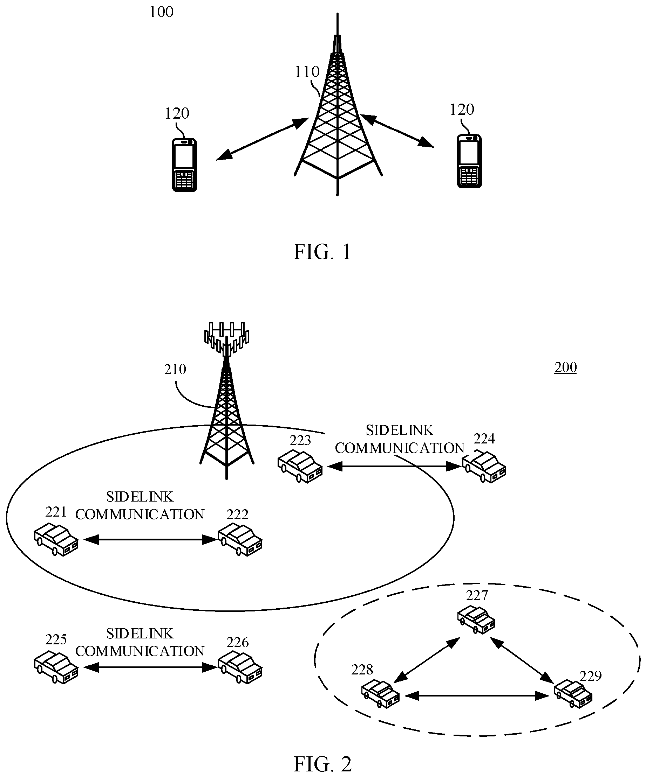

FIG. 1 illustrates a wireless communication system 100 to which the embodiments of the disclosure are applicable. The wireless communication system 100 may include a network device 110 and terminal devices 120. The network device 110 may be a device that can communicate with the terminal device 120. The network device 110 may provide communication coverage for a specific geographic area and can communicate with the terminal devices 120 located within the coverage area.

Optionally, the wireless communication system 100 may further include other network entities such as a network controller, a mobility management entity, etc., which is not limited in the embodiments of the disclosure.

Unlike traditional cellular systems where communication data is received or transmitted via a network device, sidelink communication systems (e.g., Internet of Vehicles (IoV) system) adopt a direct communication mode between terminal devices. Therefore, sidelink communication offers higher spectrum efficiency and lower transmission delay.

Several common sidelink communication scenarios will be described in conjunction with FIG. 2. In a sidelink communication system 200, based on whether terminals engaging in sidelink communication is within the coverage of a network device, three types of scenarios can be classified: scenario 1, where terminals perform slidelink communication within the coverage of the network device; scenario 2, where some terminals perform sidelink communication within the coverage of the network device; and scenario 3, where terminals perform sidelink communication outside the coverage of the network device.

As illustrated in FIG. 2, in scenario 1, terminals 221-222 can communicate with each other via a sidelink, and both the terminals 221-222 are within the coverage of the network device 210, in other words, both the terminals 221-222 are within the coverage of the same network device 210. In this scenario, the network device 210 may transmit configuration signaling to the terminals 221-222, and accordingly, the terminals 221-222 can communicate with each other via a slidelink based on the configuration signaling.

As illustrated in FIG. 2, in scenario 2, terminals 223-224 can communicate with each other via a sidelink, where the terminal 223 is within the coverage of the network device 210 and the terminal 224 is located outside the coverage of the network device 210. In this scenario, the terminal 223 can receive configuration information from the network device 210 and performs sidelink communication based on configuration of the configuration signaling. However, for the terminal 224, since the terminal 224 is outside the coverage of the network device 210, the terminal 224 cannot receive the configuration information from the network device 210. In this case, the terminal 224 may acquire sidelink communication configuration based on pre-configuration information and/or configuration information transmitted by the terminal 223 within the coverage, so that the terminal 224 can communicate with the terminal 223 via a sidelink based on the acquired configuration.

In some cases, the terminal 223 may transmit configuration information to the terminal 224 via a physical sidelink broadcast channel (PSBCH) to configure the terminal 224 to perform sidelink communication.

As illustrated in FIG. 2, in scenario 3, terminals 225-229 are outside the coverage of the network device 210 and cannot communicate with the network device 210. In this case, terminals may be configured to perform sidelink communication based on pre-configuration information.

In some cases, the terminals 227-229 outside the coverage of the network device coverage may form a communication group, where the terminals 227-229 in the communication group can communicate with each other. Furthermore, the terminal 227 in the communication group may serve as a central control node, also known as a cluster header (CH), and accordingly, the other terminals in the communication group are referred to as "group members".

As the CH, the terminal 227 may perform one or more of the following functions: establishing the communication group; managing additions and removals of group members; coordinating resources, allocating sidelink transmission resources to group members, receiving sidelink feedback from group members; coordinating resources with other communication groups, and so on.

It may be noted that, FIG. 1 and FIG. 2 exemplify a network device and multiple terminal devices. Optionally, the wireless communication systems 100 and 200 may both include multiple network devices, and in the coverage of each network device, other number of terminal devices may be included, which is not limited in the embodiments of the disclosure.

It may be understood that, the technical solutions in the embodiments of the disclosure may be applied to various communication systems, such as the fifth generation (5G) system or new radio (NR), long-term evolution (LTE) system, LTE frequency division duplex (FDD) system, LTE time division duplex (TDD) system, etc. The technical solutions of the disclosure may also be applicable to future communication systems, such as the sixth generation (6G) mobile communication system or satellite communication systems, and so on.

In the embodiments of the disclosure, a terminal device may also be referred to as a user equipment (UE), access terminal, user unit, user station, mobile station (MS), mobile terminal (MT), remote station, remote terminal, mobile device, user terminal, terminal, wireless communication device, user agent, or user apparatus. A terminal device in the embodiments of the disclosure may refer to a device that can provide voice and/or data connectivity to a user and may connect people, things, and machines, such as handheld devices and in-vehicle devices with wireless connectivity, etc. The terminal device in the embodiments of the disclosure may include a mobile phone, a pad, a laptop, a personal digital assistant (PDA), a mobile internet device (MID), a wearable device, a virtual reality (VR) device, an augmented reality (AR) device, a wireless terminal in industrial control, a wireless terminal in autonomous driving, a wireless terminal in remote surgery, a wireless terminal in a smart grid, a wireless terminal in transportation safety, a wireless terminal in a smart city, a wireless terminal in a smart home, etc. Optionally, a UE may serve as a base station. For example, a UE may serve as a scheduling entity to provide sidelink signaling among UEs in vehicle-to-everything (V2X) or device-to-device (D2D) communication. For instance, a cellular phone and a vehicle may communicate with each other via sidelink signaling. A cellular phone and a smart home device may communicate with each other without the need for communication signal relay by the base station.

In the embodiments of the disclosure, the network device may be a device that can communicate with a terminal device. The network device may also be referred to as an access network device or a radio access network (RAN) device, such as a base station. The network device in the embodiments of the disclosure refers to an RAN node (or device) that can connect terminal devices to a wireless network. The term "base station" broadly covers various names or replacements such as NodeB, evolved NodeB (eNB), next-generation NodeB (gNB), relay station, access point (AP), transmission/reception point (TRP), transmission point (TP), master eNB (MeNB), secondary eNB (SeNB), multi-standard radio (MSR) node, home base station, network controller, access node, radio node, transmission node, transceiver node, baseband unit (BBU), remote radio unit (RRU), active antenna unit (AAU), remote radio head (RRH), central unit (CU), distributed unit (DU), positioning node, etc. The base station may be a macro base station, micro base station, relay node, donor node, or a combination thereof. The base station may also refer to a communication module, modem, or chip within the aforementioned devices. Additionally, the base station may be a mobile switching center, a device performing base station functions in D2D, V2X, machine-to-machine (M2M) communication, a network-side device in 6G networks, a device performing base station functions in future communication systems, etc. The base station may support networks with the same or different access technologies. The specific technology and form of the network device are limited in the embodiments of the disclosure.

The base station may be either fixed or mobile. For example, a helicopter or drone may be configured to serve as a mobile base station, and one or more cells can move according to the position of the mobile base station. In other examples, a helicopter or drone may be configured to serve as a device that can communicate with another base station.

In some deployments, the network device in the embodiments of the disclosure may refer to a CU or DU, or a network device may include both a CU and a DU. A gNB may also include an AAU.

The network device and the terminal device can be deployed on land, including indoors or outdoors, handheld or vehicle-mounted; can also be deployed on water; can also be deployed on aircraft, balloons, and satellites in the air. The scenarios in which the network device and the terminal device are located in the embodiments of the disclosure are not limited in the embodiments of the disclosure.

It may also be understood that, all or part of the functions of the communication device in the disclosure may also be implemented by software functions running on hardware, or by virtualization functions instantiated on a platform (e.g., a cloud platform).

### Sidelink communication mode

Some standards or protocols (such as the third generation partnership project (3GPP)) define two sidelink communication modes (or transmission modes): Mode 1 and Mode 2.

In Mode 1, a resource(s) (the resource referred in the disclosure may also be referred to as a transmission resource, e.g., time-frequency resource) of a terminal device is allocated by a network device. The terminal device can transmit data on a sidelink based on a resource(s) allocated by the network device. The network device may allocate a resource(s) for a single transmission or semi-static transmission. Mode 1 is applicable in network coverage scenarios, as illustrated in FIG. 2. In the scenario as illustrated in FIG. 2, the terminal devices 221 and 222 are within the network coverage of the network device 210. The network device 210 can allocate for the terminal devices 221 and 222 a resource(s) for sidelink transmission. The network device may perform grant via a downlink (DL) to allocate for the terminal devices 221 and 222 a resource(s) for sidelink transmission, so that the terminal devices 221 and 222 can communicate with each other via a sidelink. In some embodiments, Mode 1 may also be referred to as Mode A.

In Mode 2, the terminal device can autonomously select one or more resources from a resource pool. Specifically, the terminal device can select a transmission resource(s) from a resource pool through sensing or random selection. For instance, the terminal device 221 is within the network coverage. The terminal device 221 can autonomously select a resource(s) for sidelink transmission from a pre-configured resource pool, or can autonomously select one or more resources from a resource pool configured by the network device 210. It may be noted that, terminal devices outside the network coverage (e.g., the terminal 225) can also use Mode 2 for resource selection. In some embodiments, Mode 2 may also be referred to as Mode B.

### Radio resource scheduling

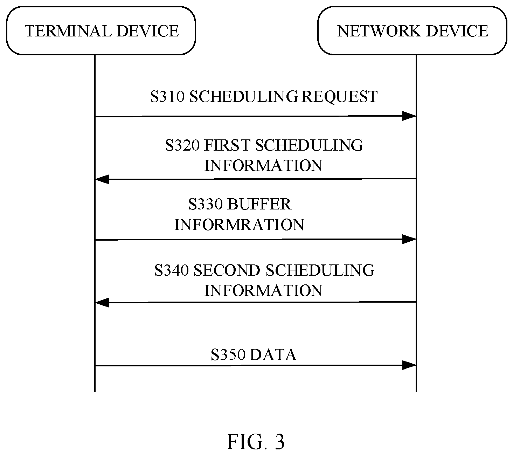

In a communication system, the network device can schedule a radio resource(s) for the terminal device through the process as illustrated in FIG. 3, allowing the terminal device to transmit data.

The method as illustrated in FIG. 3 may include steps S310-S350.

Step S310, the terminal device transmits a scheduling request to the network device.

Based on the acquired scheduling request, the network device can schedule the terminal device to transmit a packet data unit (PDU), i.e., the network device can allocate a resource(s) for the terminal device to allow the terminal device to transmit the PDU.

Step S320, the network device transmits a first scheduling message, where the first scheduling message is used to schedule the terminal device to transmit the PDU.

Step S330, based on the resource(s) allocated by the network device, the terminal device can transmit buffer information of the terminal device to the network device. The buffer information may be a buffer status report (BSR). The BSR may indicate the amount of data to be transmitted in a buffer of the terminal device.

Step S340, based on the buffer information, the network device transmits a second scheduling message. The second scheduling message is used to schedule the terminal device to transmit data. In other words, the second scheduling message may indicate a radio resource(s) scheduled by the network device for data transmission of the terminal device.

Step S350, based on the second scheduling message, the terminal device can transmit a packet.

In the method as illustrated in FIG. 3, the radio resource used for transmitting the PDU carrying the buffer information and the radio resource used for transmitting the PDU carrying the packet are exclusively scheduled for the terminal device. Therefore, by means of the method as illustrated in FIG. 3, conflicts in radio resource usage among different terminal devices within the same cell can be avoided.

However, based on the method as illustrated in FIG. 3, before transmitting data, the terminal device needs to perform a handshake process with the network device, including steps S310-S340. The handshake process may result in relatively long user-plane delay. For applications with relatively continuous packet arrivals, a subsequent PDU for data transmission can also carry the buffer information, so that the delay issue is not too serious. However, for applications with discontinuous packet arrivals, the terminal device may frequently transmit a scheduling request, introducing additional user-plane delay.

The above illustrates the technical solution that the network device schedules a radio resource(s) for the terminal device to avoid resource conflicts. The technical solution is crucial in scenarios in which the coverage range of a cell is relatively large and/or a frequency band of a carrier used by the cell is relatively low. In the case where the cell is a macro cell covering a relatively large range, e.g., about several hundred meters to tens of kilometers, there are usually many terminal devices within the cell, making conflict resolution essential. As wireless communication systems evolve, in new wireless communication systems, not only previously utilized radio frequency resources may be used, but also new spectrums may be added. For example, the 5G system can reuse sub-2 gigahertz (GHz) bands from the second generation (2G), the third generation (3G), and the fourth generation (4G) networks. Additionally, the 5G system can deploy networks in new frequency bands, such as the 3.5GHz band. One important reason for deploying networks in the 3.5GHz band is that the 3.5GHz band can offer a bandwidth of more than 100 Megahertz (MHz) in many countries. To reduce costs, operators implement measures to make the coverage of the 3.5GHz band comparable to that of previous systems, thereby leveraging hardware and infrastructure of the existing systems. However, the method cannot be adopted for all frequency bands. For instance, millimeter waves can merely cover hotspot areas. Due to the propagation characteristics of millimeter waves, millimeter waves can only cover a limited area. For example, for a cell with a radius of tens of meters, the number of terminal devices served in the cell is much smaller than that in a macro cell.

In the case where the cell has a relatively small coverage range, the probability of conflicts occurring when terminal devices access the same radio resource pool is significantly reduced. Even if conflicts occur, technical enhancements such as hybrid automatic repeat request (HARQ) retransmission mechanisms can be employed. For example, assuming the conflict probability in a radio resource pool currently used by the terminal device is 10% and the block error rate (BLER) of HARQ is 0, the success rate per transmission attempt is 81% (90% * 90%), while the failure rate per transmission attempt is 19%. If an HARQ process supports a maximum of two retransmissions (three attempts in total including initial transmission), the probability of failing after three transmissions is merely 0.6859%. This demonstrates a high success rate of transmission, primarily due to the relatively low conflict probability in the radio resource pool.

In some embodiments, such as in Mode 2 of the sidelink communication system mentioned above, the network device may notify the terminal device of a radio resource(s) or a resource pool available for data transmission. When the terminal device needs to transmit data, the terminal device can utilize these pre-configured radio resources to transmit data, without transmitting a scheduling request. In this case, the network device does not know whether the terminal device will transmit data or how much data the terminal device will transmit. In some embodiments, the network device may allocate relatively few radio resources to the terminal device, so that a conservative resource scheduling scheme may be adopted. Alternatively, the network device may allocate more radio resources to the terminal device, but the terminal device may not utilize all the configured radio resources, leading to resource wastage.

Thus, in the related art, resource scheduling for the terminal device presents various issues, including relatively long user-plane delay, radio resource wastage, resource conflicts, etc.

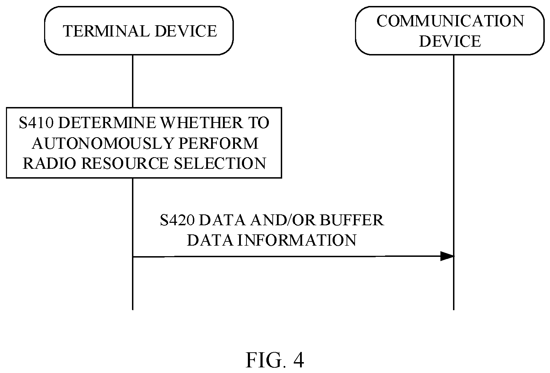

FIG. 4 illustrates a communication method provided in the embodiments of the disclosure to address the aforementioned issues. The method as illustrated in FIG. 4 may be executed by a terminal device and a communication device. The communication device may include a network device and/or another terminal device. The method depicted in FIG. 4 may include step S410 to step S420.

S410, the terminal device determines whether to autonomously perform radio resource selection.

In the disclosure, a manner in which the terminal device determines whether to autonomously perform radio resource selection is not limited. For example, the terminal device may determine whether to autonomously perform radio resource selection based on a machine learning model. The machine learning model may include, for example, a multi-armed bandit (MAB) algorithm.

The machine learning model can process more complex input data, enabling the terminal device to make, based on multiple factors, more accurate decisions regarding whether to autonomously perform radio resource selection.

In the case where the terminal device determines not to autonomously perform radio resource selection, the terminal device may acquire a radio resource(s) based on related technologies. For example, the terminal device may acquire a radio resource(s) for data transmission according to scheduling by a scheduler.

In the case where the terminal device determines to autonomously perform radio resource selection, the terminal device may select a first radio resource from a resource pool. The first radio resource may constitute part or all of the resource pool. Resources in the resource pool may be shared among terminal devices within a cell. Information of the resource pool may be transmitted to the terminal device by the network device via signaling.

Based on the disclosure, whether to autonomously perform radio resource selection is determined by the terminal device itself. In some cases, the terminal device may determine to autonomously perform radio resource selection, that is, the terminal device itself can acquire a resource(s) for data transmission without introducing additional delay. In some cases, the terminal device may determine not to autonomously perform radio resource selection, in which case the scheduler can schedule the terminal device to allocate a radio resource(s) dedicated to the terminal device to avoid issues such as resource conflicts or resource wastage. Therefore, based on the disclosure, the terminal device can determine whether to autonomously perform radio resource selection depending on different situations, thereby reducing delay to a certain extent and avoiding resource wastage.

S420, the terminal device transmits data and/or buffer data information based on a first radio resource.

The buffer data information may also be referred to as buffer status information (BSI). The buffer data information can indicate information of a buffer in the terminal device. The buffer can buffer data to be transmitted, meaning that the data to be transmitted may be data stored in the buffer. The buffer data information may include one or more of the following information of data buffered in the buffer: a size of the data, a relationship between the data and a logical channel, and a remaining delay budget. The remaining delay budget may indicate, for example, how much time is left for a packet before exceeding packet delay budget.

In some embodiments, the buffer may receive and store a service data unit (SDU) transmitted by an upper-layer protocol. The buffer may belong to a transmitting entity of the terminal device that is responsible for transmitting data. The transmitting entity may also include the aforementioned machine learning model and/or a transmitting unit. The transmitting unit can process a SDU to form a PDU. The transmitting unit can also pass the PDU to an entity corresponding to a next-layer protocol of the transmitting entity for further processing. For example, the transmitting entity may be a medium access control (MAC) entity, and the entity corresponding to the next-layer protocol may be a physical layer protocol entity.

The communication device that receives the data transmitted by the terminal device and the communication device that receives the buffer data information may be the same or different. For example, the communication device that receives the data may be a first communication device, and the communication device that receives the buffer data information may be a second communication device. That is, the communication devices as illustrated in FIG. 4 may include the first communication device and/or the second communication device. The first communication device and the second communication device may be the same or different.

In some embodiments, the first communication device may be a device that can communicate with the terminal device. In other words, the first communication device may be a device that can receive a PDU transmitted by the terminal device. The first communication device may be, for example, a network device or another terminal device. For instance, the data transmitter may be the first terminal device, and the data receiver may be the second terminal device. The first terminal device and the second terminal device can communicate with each other via a sidelink.

In some embodiments, the second communication device may be a device where the scheduler resides. The scheduler can be used to schedule a radio resource(s) for the terminal device. The communication device where the scheduler resides may be a network device. For example, the communication device where the scheduler resides may be a base station or an AP. The AP can be used to establish a local area network (LAN). After receiving the buffer data information, the communication device where the scheduler resides can schedule buffer data in the buffer based on the buffer data information, so that a dedicated radio resource(s) can be scheduled for the terminal device for data transmission. As a result, resource conflicts during data transmission can be avoided. Furthermore, based on the above manner, the terminal device can acquire a radio resource(s) for data transmission without needing to transmit a scheduling request, thereby reducing user-plane delay.

If the scheduler has scheduled a radio resource(s) for the terminal device, the scheduler can transmit a scheduling indication or scheduling information to the terminal device. Upon reception of the scheduling indication, the terminal device may suspend the process of determining whether to autonomously perform radio resource selection and instead use the radio resource(s) scheduled by the scheduler to perform data transmission. If the terminal device does not receive the scheduling indication and the buffer of the terminal device has data that needs to be transmitted, the terminal device may restart the process of determining whether to autonomously perform radio resource selection.

In some embodiments, a priority of the buffer data information may not be lower than a priority of the data transmitted by the terminal device. In some embodiments, a point of time at which the buffer data information is transmitted may not be later than a point of time at which the data is transmitted. For example, in resource-limited scenarios, the terminal device may first transmit the buffer data information before transmitting data. In non-resource-limited scenarios, the terminal device may transmit data and the buffer data information simultaneously. In some embodiments, the buffer data information may be placed first in the PDU, and then other content (e.g., first data) may be multiplexed. The priority of the buffer data information is higher than that of the data transmitted by the terminal device, so that the buffer data information can be more easily received by the receiving end, and thus the receiving end can perform scheduling based on the buffer data information, thereby preventing resource conflicts in subsequent communications.

In some embodiments, the terminal device may determine whether to autonomously perform radio resource selection based on second information. For example, in the case where the terminal device uses the machine learning model to determine whether to autonomously perform radio resource selection, the input information for the machine learning model may include the second information.

The second information may include one or more of the following: external environmental information of the terminal device, internal configuration parameters of the terminal device, and service information.

In some embodiments, the external environmental information of the terminal device may include radio environment information. The radio environment information may include one or more of the following: congestion status of a radio channel, a signal-to-noise ratio (SNR) of the radio channel, etc. The radio environment information may be represented in a quantifiable manner. For example, the congestion status of the radio channel may be represented as a percentage of currently utilized radio channel resources relative to total radio channel resources.

It may be noted that, the radio environment information may include information of a resource pool. For example, the radio environment information may include a congestion level of the resource pool.

In some embodiments, the internal configuration parameters of the terminal device may include a configuration parameter(s) of the buffer of the terminal device, such as a size of the buffer.

In some embodiments, the service information may include one or more of the following: a data arrival pattern and a quality of service (QoS) parameter. The data arrival pattern may include one or more of the following parameters: a data arrival period, jitter, a packet size, etc. The QoS parameter may refer to a QoS parameter for packet transmission. For example, the QoS parameter may include one or more of the following: delay budget, a packet loss rate, etc.

The data transmitted by the terminal device based on the first radio resource may be part or all of the data to be transmitted.

The data transmitted by the terminal device may be all or part of the data to be transmitted. That is, the data transmitted by the terminal device may be all or part of the data in the buffer. In some embodiments, the data transmitted by the terminal device is first data. If the first data is part of the data to be transmitted, the buffer data information may indicate remaining data of the data to be transmitted. For example, the first data may be data forming a PDU, and the data remaining in the buffer may be the remaining data of the data to be transmitted. In this case, the information of the data remaining in the buffer may be indicated via the buffer data information. For example, the buffer data information may include one or more of the following: a size of the remaining data of the data to be transmitted; a relationship between the remaining data of the data to be transmitted and a logical channel; and a remaining delay budget for the remaining data of the data to be transmitted.

Once the scheduler receives the buffer data information, the scheduler can acquire the remaining data of the data to be transmitted in the buffer. Based on this, the scheduler can schedule the remaining data of the data to be transmitted, i.e., allocate a resource(s) for the remaining data of the data to be transmitted. The resource(s) allocated by the scheduler may be a resource(s) dedicated to the terminal device, thus avoiding resource conflicts when transmitting the remaining data of the data to be transmitted.

In some embodiments, the buffer data information and the first data may be multiplexed into the same PDU. In the case where a communication device hosting the scheduler and the data receiver are the same device, the buffer data information and the first data may be multiplexed into the same PDU. This allows the receiving end to receive the buffer data information and the first data simultaneously.

In the case where the terminal device autonomously performs radio resource selection, the terminal device can also determine third information. For example, the third information may be determined through a machine learning model. In other words, the third information may be output information of the machine learning model.

For example, the third information can indicate information of data transmitted in this transmission, information of a radio resource(s) used for this transmission, etc. For example, the third information may include one or more of the following: a size of a PDU to be transmitted, amount of radio resources selectable by the terminal device, etc. The size of the PDU to be transmitted can be expressed in bits (bytes). The amount of radio resources selectable by the terminal device may indicate how much radio resources the terminal device needs to use for PDU transmission.

Based on the third information, the terminal device can determine the size of the data to be transmitted and/or the size of the buffer data information. For example, the terminal device can adapt the size of the buffer data information to be transmitted and/or the SDU to match the amount of radio resources selectable by the terminal device and/or the size of the PDU to be transmitted. In some embodiments, the terminal device can perform adaption by pruning the buffer data information. The buffer data information can be pruned by a protocol layer where the transmitting entity resides. In some embodiments, the terminal device can perform packet segmentation on the SDU for adaption. The segmentation of the SDU can be performed either at the protocol layer where the transmitting entity resides or at an upper protocol layer where the transmitting entity resides.

If the size of the PDU to be transmitted and/or the amount of radio resources selectable by the terminal device is not determined, in the presence of the buffer data information, the transmitting entity of the terminal device can multiplex the buffer data information and at least one SDU into a PDU for transmission.

In some embodiments, a radio resource used by the terminal device in last data transmission is a second radio resource, and the first radio resource may be the same as or different from the second radio resource. The case that the first radio resource is different from the second radio resource may refer to that the first radio resource differs from the second radio resource in one or more the following: time domain, code domain, frequency domain, spatial domain, and power domain. In the case where the first radio resource is different from the second radio resource, conflicts can be avoided, and transmit diversity can also be achieved.

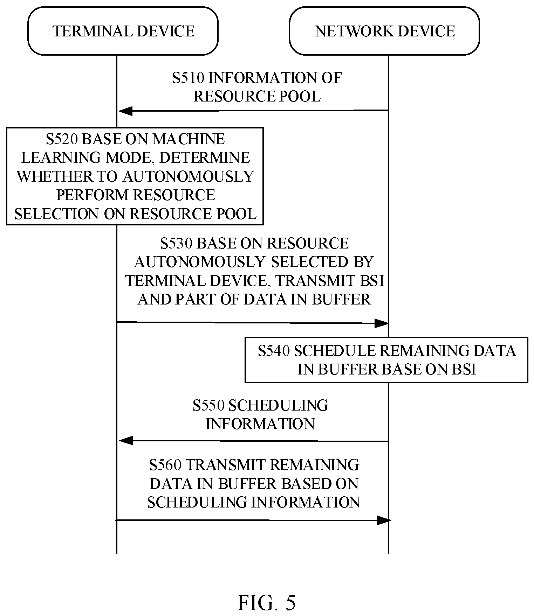

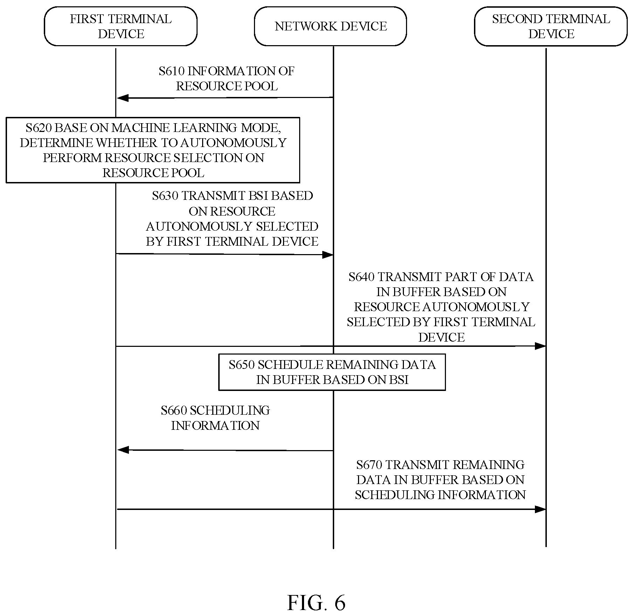

The overall process of the embodiments provided in the disclosure will be described below with reference to FIGS. 5 and 6.

FIG. 5 is a schematic flow chart of a communication method provided in the embodiments of the disclosure. The method as illustrated in FIG. 5 may be executed by a terminal device and/or a network device. The method as illustrated in FIG. 5 may include steps S510 to S560.

Step S510, the network device transmits information of a resource pool to the terminal device. The information of the resource pool indicates information about resources shared by terminal devices within a cell.

Step S520, based on a machine learning model, the terminal device determines whether to autonomously perform resource selection on the resource pool.

Step S530, the terminal device transmits BSI and part of data in a buffer to the network device based on a resource(s) autonomously selected by the terminal device. The BSI indicates information about remaining data in the buffer.

Step S540, the network device schedules the remaining data in the buffer based on the BSI. In other words, the network device allocates a radio resource(s) for the remaining data in the buffer of the terminal device based on the BSI.

Step S550, the network device transmits scheduling information to the terminal device. The scheduling information may indicate the radio resource(s) allocated by the network device in step S540.

Step S560, the terminal device transmits the remaining data in the buffer based on the scheduling information transmitted in step S550.

FIG. 6 is a schematic flow chart of another communication method provided in the embodiments of the disclosure. The method as illustrated in FIG 6 may be executed by one or more of a first terminal device, a second terminal device, and a network device. The method as illustrated in FIG. 6 may include steps S610 to S670.

Step S610, the network device transmits information of a resource pool to the first terminal device. The information of the resource pool indicates information about resources shared by terminal devices within a cell.

Step S620, based on a machine learning model, the first terminal device determines whether to autonomously perform resource selection on the resource pool.

Step S630, based on a resource(s) autonomously selected, the first terminal device may transmit BSI to the network device. The BSI indicates information about remaining data in a buffer.

Step S640, based on the resource(s) autonomously selected, the first terminal device may transmit part of data in the buffer to the second terminal device.

The first terminal device and the second terminal device may communicate with each other via a sidelink.

Step S650, the network device schedules the remaining data in the buffer of the first terminal device based on the BSI. In other words, the network device may allocate a radio resource(s) for the remaining data in the buffer of the first terminal device based on the BSI.

Step S660, the network device transmits scheduling information to the first terminal device. The scheduling information may indicate the radio resource(s) allocated by the network device in step S650.

Step S670, based on the scheduling information, the first terminal device transmits the remaining data in the buffer to the second terminal device.

It may be noted that, in some embodiments, the buffer may also be referred to as a transmission buffer, a buffer area, a buffer, or a cache.

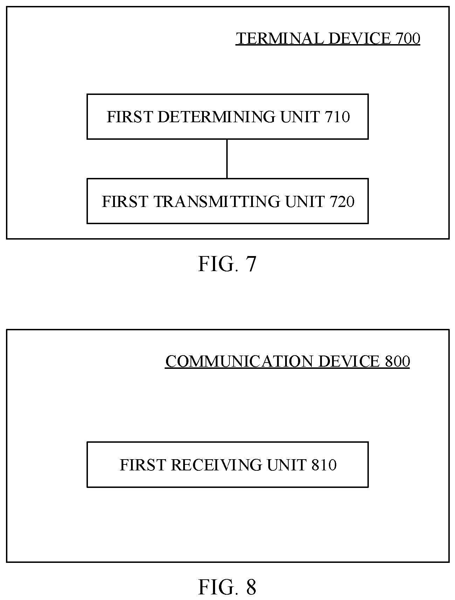

The method embodiments provided in the disclosure have been described in detail above. The following will describe the device embodiments in detail with reference to FIGS. 7 to 9. It may be understood that, the illustration of the method embodiments corresponds to the illustration of the device embodiments, and thus for parts not described in detail, reference can be made to the method embodiments described above.

FIG. 7 is a schematic structural diagram of a terminal device 700 provided in the embodiments of the disclosure. The terminal device 700 may include a first determining unit 710 and a first transmitting unit 720.

The first determining unit 710 is configured to determine whether to autonomously perform resource selection. The first transmitting unit 720 is configured to transmit data and/or buffer data information based on a first radio resource autonomously selected by the terminal device, in the case where the terminal device autonomously performs resource selection.

In some embodiments, the first determining unit is specifically configured to determine whether to autonomously perform resource selection based on a machine learning model.

In some embodiments, the first determining unit is specifically configured to determine whether to autonomously perform resource selection based on second information. The second information includes one or more of the following: radio environment information; a size of a buffer in the terminal device, where the buffer is used to buffer data to be transmitted; and service information.

In some embodiments, the radio environment information includes one or more of the following: congestion status of a radio channel and an SNR.

In some embodiments, the service information includes one or more of the following: a data arrival pattern and a QoS parameter.

In some embodiments, the data transmitted based on the first radio resource is first data. In the case where the first data is part of the data to be transmitted, the buffer data information indicates information about remaining data of the data to be transmitted.

In some embodiments, a priority of the buffer data information is higher than a priority of the first data.

In some embodiments, the buffer data information and the first data are multiplexed into a same PDU.

In some embodiments, the buffer data information includes one or more of the following: a size of the remaining data of the data to be transmitted; a relationship between the remaining data of the data to be transmitted and a logical channel; and a remaining delay budget of the remaining data of the data to be transmitted.

In some embodiments, in the case where the terminal device autonomously performs resource selection, the terminal device further includes a second determining unit configured to determine third information. The third information includes one or more of the following: a size of a PDU to be transmitted and amount of radio resources selectable by the terminal device.

In some embodiments, the size of the data transmitted by the terminal device and/or the size of the buffer data information is determined based on the third information.

In some embodiments, the radio resource used by the terminal device in last data transmission is a second radio resource, and the first radio resource is different from the second radio resource.

In some embodiments, the first radio resource differs from the second radio resource in one or more of the following: time domain, code domain, frequency domain, spatial domain, and power domain.

In some embodiments, the machine learning model includes an MAB algorithm.

FIG. 8 is a schematic structural diagram of a communication device 800 provided in the embodiments of the disclosure. The communication device 800 may include a first receiving unit 810.

The first receiving unit 810 is configured to receive data and/or buffer data information transmitted by a terminal device based on a first radio resource autonomously selected by the terminal device, in the case where the terminal device autonomously performs resource selection. Whether the terminal device autonomously performs resource selection is determined by the terminal device.

In some embodiments, whether the terminal device autonomously performs resource selection is determined based on a machine learning model.

In some embodiments, whether the terminal device autonomously performs resource selection is determined based on second information. The second information includes one or more of the following: radio environment information; a size of a buffer in the terminal device, where the buffer is used to buffer data to be transmitted; and service information.

In some embodiments, the radio environment information includes one or more of the following: congestion status of a radio channel and an SNR.

In some embodiments, the service information includes one or more of the following: a data arrival pattern and a QoS parameter.

In some embodiments, the data transmitted based on the first radio resource is first data. In the case where the first data is part of the data to be transmitted, the buffer data information indicate information about remaining data of the data to be transmitted.

In some embodiments, a priority of the buffer data information is higher than a priority of the first data.

In some embodiments, the buffer data information and the first data are multiplexed into a same PDU.

In some embodiments, the buffer data information includes one or more of the following: a size of the remaining data of the data to be transmitted; a relationship between the remaining data of the data to be transmitted and a logical channel; and a remaining delay budget of the remaining data of the data to be transmitted.

In some embodiments, a radio resource used by the terminal device in last data transmission is a second radio resource, and the first radio resource is different from the second radio resource.

In some embodiments, the first radio resource differs from the second radio resource in one or more of the following: time domain, code domain, frequency domain, spatial domain, and power domain.

In some embodiments, the machine learning model includes an MBA algorithm.

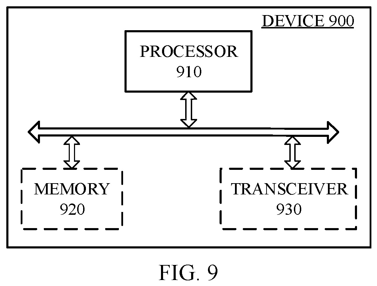

In an optional embodiment, the first transmitting unit 720 or the first receiving unit 810 may be a transceiver 930, and the first determining unit 720 or the second determining unit may be a processor 910. The terminal device 700 or the communication device 800 may further include a memory 920, as illustrated in FIG. 9.

FIG. 9 is a schematic structural diagram of a communication device provided in the embodiments of the disclosure. The dashed lines in FIG. 9 indicate that a unit or module is optional. The device 900 may be used to implement the methods described in the method embodiments described above. The device 900 may be a chip, a terminal device, or a network device.

The device 900 may include one or more processors 910, which can support the device 900 to implement the methods described in the method embodiments described above. The processor 910 may be a general-purpose processor or a specialized processor. For example, the processor may be a central processing unit (CPU). Alternatively, the processor may be another general-purpose processor, a digital signal processor (DSP), an application-specific integrated circuit (ASIC), a field-programmable gate array (FPGA), another programmable logic device, a discrete gate or transistor logic device, a discrete hardware component, etc.

The device 900 may also include one or more memories 920 storing a program that, when executed by the processor 910, can enable the processor 910 to execute the methods described in the method embodiments described above. The memory 920 may be independent of or integrated with the processor 910.

The device 900 may also include a transceiver 930. The processor 910 may communicate with other devices or chips through the transceiver 930. For example, the processor can transmit data to and receive data from other devices or chips via the transceiver 930.

The disclosure further provides a computer-readable storage medium storing a program. The computer-readable storage medium can be applied to the terminal device or network device provided in the embodiments of the disclosure, and the program can enable a computer to execute the methods performed by the terminal device or network device in various embodiments of the disclosure.

The disclosure further provides a computer program product. The computer program product includes a program, and can be applied to the terminal device or network device provided in the embodiments of the disclosure. The program can enable a computer to execute the methods performed by the terminal device or network device in various embodiments of the disclosure.

The disclosure further provides a computer program. The computer program can be applied to the terminal device or network device provided in the embodiments of the disclosure. The computer program can enable a computer to execute the methods performed by the terminal device or network device in various embodiments of the disclosure.

It may be noted that, the terms "system" and "network" herein are usually used interchangeably throughout this disclosure. In addition, terms used in the disclosure are merely intended for explaining embodiments of the disclosure rather than limiting the disclosure. The terms "first", "second", "third", "fourth", and the like used in the specification, the claims, and the accompany drawings of the disclosure are used to distinguish different objects rather than describe a particular order. In addition, the terms "include", "comprise", and "have" as well as variations thereof are intended to cover non-exclusive inclusion.

It may be understood that, "indication" referred to in the embodiments of the disclosure may be a direct indication, may be an indirect indication, or may mean that there is an association relationship. For example, *A* indicates *B* may mean that *A* directly indicates *B,* for instance, *B* can be acquireed according to *A;* may mean that *A* indirectly indicates *B,* for instance, *A* indicates *C*, and *B* can be acquireed according to *C*; or may mean that that there is an association relationship between *A* and *B.*

In the embodiments of the disclosure, "B corresponding to A" means that B is associated with A and can be determined based on A. However, it may be understood that, determining B based on A does not mean that B is determined solely based on A, and B may also be determined based on A and/or other information.

In the embodiments of the disclosure, the term "correspondence" may mean that there is a direct or indirect correspondence between the two, may mean that there is an association between the two, or may mean a relationship of indicating and indicated or configuring and configured, etc.

In the embodiments of the disclosure, the "pre-defined" or "pre-configured" can be implemented by pre-saving a corresponding code or table in a device (for example, including the terminal device and the network device) or in other manners that can be used for indicating related information, and the disclosure is not limited in this regard. For example, the "pre-defined" may mean defined in a protocol.

In the embodiments of the disclosure, the "protocol" may refer to a communication standard protocol, which may include, for example, an LTE protocol, an NR protocol, and a protocol applied to a future communication system, and the disclosure is not limited in this regard.

In embodiments of the disclosure, "and/or" merely describes an association relationship between associated objects, which means that there may be three relationships. For example, *A* and/or *B* can mean *A* alone, both *A* and *B* exist, and *B* alone. The character "/" herein generally indicates that the associated objects are in an "or" relationship.

In various embodiments of the disclosure, the magnitude of a sequence number of each of the foregoing processes does not imply an execution order, and the execution order between the processes should be determined according to function and internal logic thereof, which shall not constitute any limitation to the implementation of the embodiments of the disclosure.

It may be appreciated that, the devices and methods disclosed in the embodiments of the disclosure may also be implemented in various other manners. For example, the above device implementations are merely illustrative, e.g., the division of units is only a division of logical functions, and other manners of division may be available in practice, e.g., multiple modules may be combined or may be integrated into another system, or some features may be ignored or skipped. In other respects, the coupling or direct coupling or communication connection as illustrated or discussed may be an indirect coupling or communication connection through some interface or module, and may be electrical, mechanical, or otherwise.

Units illustrated as separated components may or may not be physically separated. Components displayed as units may or may not be physical units, and may reside at one location or may be distributed to multiple networked units. Some or all of the units may be selectively adopted according to practical needs to achieve desired objectives of the solutions of the embodiments.

In addition, various functional units described in various embodiments of the disclosure may be integrated into one processing unit or may be present as a number of physically separated units, and two or more units may be integrated into one.

All or some of the above embodiments can be implemented through software, hardware, firmware, or any other combination thereof. When implemented by software, all or some of the above embodiments can be implemented in the form of a computer program product. The computer program product includes one or more computer instructions. When the computer instructions are applied and executed on a computer, all or some of the operations or functions of the embodiments of the disclosure are performed. The computer can be a general-purpose computer, a special-purpose computer, a computer network, or other programmable apparatuses. The computer instruction can be stored in a computer-readable storage medium, or transmitted from one computer-readable storage medium to another computer-readable storage medium. For example, the computer instruction can be transmitted from one website, computer, server, or data center to another website, computer, server, or data center in a wired manner or in a wireless manner. Examples of the wired manner can be a coaxial cable, an optical fiber, a digital subscriber line (DSL), etc. The wireless manner can be, for example, infrared, wireless, microwave, etc. The computer-readable storage medium can be any computer accessible usable-medium or a data storage device such as a server, a data center, or the like which integrates one or more usable media. The usable medium can be a magnetic medium (such as a soft disk, a hard disk, or a magnetic tape), an optical medium (such as a digital video disc (DVD)), or a semiconductor medium (such as a solid state disk (SSD)), etc.

The above illustration is only specific embodiments of the disclosure, but the protection scope of the disclosure is not limited thereto. Any modifications or substitutions that can be easily conceived by those skilled in the art within the technical scope disclosed in the disclosure shall be encompassed within the protection scope of the disclosure. Therefore, the protection scope of the disclosure shall be determined by the scope of the claims.

## Claims

1. A communication method, comprising:
determining, by a terminal device, whether to autonomously perform radio resource selection;
in a case where the terminal device autonomously performs radio resource selection, transmitting, by the terminal device, data and/or buffer data information based on a first radio resource autonomously selected by the terminal device.

2. The method according to claim 1, wherein determining, by the terminal device, whether to autonomously perform radio resource selection comprises:
determining, by the terminal device, whether to autonomously perform radio resource selection based on a machine learning model.

3. The method according to claim 1 or 2, wherein determining, by the terminal device, whether to autonomously perform radio resource selection comprises:
determining, by the terminal device, whether to autonomously perform radio resource selection based on second information;
wherein the second information comprises one or more of the following:
radio environment information;
a size of a buffer in the terminal device, wherein the buffer is used to buffer data to be transmitted; and
service information.

4. The method according to claim 3, wherein the radio environment information comprises one or more of the following: congestion status of a radio channel; and a signal-to-noise ratio (SNR).

5. The method according to claim 3 or 4, wherein the service information comprises one or more of the following: a data arrival pattern; and a quality of service (QoS) parameter.

6. The method according to any one of claims 1 to 5, wherein the data transmitted based on the first radio resource is first data, and in a case where the first data is part of data to be transmitted, the buffer data information indicates information of remaining data of the data to be transmitted.

7. The method according to claim 6, wherein a priority of the buffer data information is higher than a priority of the first data.

8. The method according to claim 6 or 7, wherein the buffer data information and the first data are multiplexed into a same packet data unit (PDU).

9. The method according to any one of claims 6 to 8, wherein the buffer data information comprises one or more of the following:
a size of the remaining data of the data to be transmitted;
a relationship between the remaining data of the data to be transmitted and a logical channel; and
a remaining delay budget of the remaining data of the data to be transmitted.

10. The method according to any one of claims 1 to 9, wherein in a case where the terminal device autonomously performs radio resource selection, the method further comprises:
determining, by the terminal device, third information;
wherein the third information comprises one or more of the following:
a size of a PDU to be transmitted;
amount of radio resources selectable by the terminal device.

11. The method according to claim 10, wherein a size of the data transmitted by the terminal device and/or a size of the buffer data information is determined based on the third information.

12. The method according to any one of claims 1 to 11, wherein a radio resource used by the terminal device in last data transmission is a second radio resource, and the first radio resource is different from the second radio resource.

13. The method according to claim 12, wherein the first radio resource differs from the second radio resource in one or more of the following: time domain, code domain, frequency domain, spatial domain, and power domain.

14. The method according to claim 2, wherein the machine learning model comprises a multi-armed bandit (MAB) algorithm.

15. A communication method, comprising:
receiving, by a communication device based on a first radio resource autonomously selected by a terminal device, data and/or buffer data information transmitted by the terminal device, in a case where the terminal device autonomously performs radio resource selection;
wherein whether the terminal device autonomously performs radio resource selection is determined by the terminal device.

16. The method according to claim 15, wherein whether the terminal device autonomously performs radio resource selection is determined based on a machine learning model.

17. The method according to claim 15 or 16, wherein whether the terminal device autonomously performs radio resource selection is determined based on second information;
wherein the second information comprises one or more of the following:
radio environment information;
a size of a buffer in the terminal device, wherein the buffer is used to buffer data to be transmitted; and
service information.

18. The method according to claim 17, wherein the radio environment information comprises one or more of the following: congestion status of a radio channel; and a signal-to-noise ratio (SNR).

19. The method according to claim 17 or 18, wherein the service information comprises one or more of the following: a data arrival pattern; and a quality of service (QoS) parameter.

20. The method according to any one of claims 15 to 19, wherein the data transmitted based on the first radio resource is first data, and in a case where the first data is part of data to be transmitted, the buffer data information indicates information of remaining data of the data to be transmitted.

21. The method according to claim 20, wherein a priority of the buffer data information is higher than a priority of the first data.

22. The method according to claim 20 or 21, wherein the buffer data information and the first data are multiplexed into a same packet data unit (PDU).

23. The method according to any one of claims 20 to 22, wherein the buffer data information comprises one or more of the following:
a size of the remaining data of the data to be transmitted;
a relationship between the remaining data of the data to be transmitted and a logical channel; and
a remaining delay budget of the remaining data of the data to be transmitted.

24. The method according to any one of claims 15 to 23, wherein a radio resource used by the terminal device in last data transmission is a second radio resource, and the first radio resource is different from the second radio resource.

25. The method according to claim 24, wherein the first radio resource differs from the second radio resource in one or more of the following: time domain, code domain, frequency domain, spatial domain, and power domain.

26. The method according to claim 16, wherein the machine learning model comprises a multi-armed bandit (MAB) algorithm.

27. A terminal device, comprising:
a first determining unit configured to determine whether to autonomously perform radio resource selection; and
a first transmitting unit configured to transmit data and/or buffer data information based on a first radio resource autonomously selected by the terminal device, in a case where the terminal device autonomously performs radio resource selection.

28. The terminal device according to claim 27, wherein the first determining unit is specifically configured to:
determine whether to autonomously perform radio resource selection based on a machine learning model.

29. The terminal device according to claim 27 or 28, wherein the first determining unit is specifically configured to:
determine whether to autonomously perform radio resource selection based on second information;
wherein the second information comprises one or more of the following:
radio environment information;
a size of a buffer in the terminal device, wherein the buffer is used to buffer data to be transmitted; and
service information.

30. The terminal device according to claim 29, wherein the radio environment information comprises one or more of the following: congestion status of a radio channel; and a signal-to-noise ratio (SNR).

31. The terminal device according to claim 29 or 30, wherein the service information comprises one or more of the following: a data arrival pattern; and a quality of service (QoS) parameter.

32. The terminal device according to any one of claims 27 to 31, wherein the data transmitted based on the first radio resource is first data, and in a case where the first data is part of data to be transmitted, the buffer data information indicates information of remaining data of the data to be transmitted.

33. The terminal device according to claim 32, wherein a priority of the buffer data information is higher than a priority of the first data.

34. The terminal device according to claim 32 or 33, wherein the buffer data information and the first data are multiplexed into a same packet data unit (PDU).

35. The terminal device according to any one of claims 32 to 34, wherein the buffer data information comprises one or more of the following:
a size of the remaining data of the data to be transmitted;
a relationship between the remaining data of the data to be transmitted and a logical channel; and
a remaining delay budget of the remaining data of the data to be transmitted.

36. The terminal device according to any one of claims 27 to 35, wherein in a case where the terminal device autonomously performs radio resource selection, the terminal device further comprises:
a second determining unit configured to determine third information;
wherein the third information comprises one or more of the following:
a size of a PDU to be transmitted;
amount of radio resources selectable by the terminal device.

37. The terminal device according to claim 36, wherein a size of the data transmitted by the terminal device and/or a size of the buffer data information is determined based on the third information.

38. The terminal device according to any one of claims 27 to 37, wherein a radio resource used by the terminal device in last data transmission is a second radio resource, and the first radio resource is different from the second radio resource.

39. The terminal device according to claim 38, wherein the first radio resource differs from the second radio resource in one or more of the following: time domain, code domain, frequency domain, spatial domain, and power domain.

40. The terminal device according to claim 28, wherein the machine learning model comprises a multi-armed bandit (MAB) algorithm.

41. A communication device, comprising:
a first receiving unit configured to receive, based on a first radio resource autonomously selected by a terminal device, data and/or buffer data information transmitted by the terminal device, in a case where the terminal device autonomously performs radio resource selection;
wherein whether the terminal device autonomously performs radio resource selection is determined by the terminal device.

42. The communication device according to claim 41, wherein whether the terminal device autonomously performs radio resource selection is determined based on a machine learning model.

43. The communication device according to claim 41 or 42, wherein whether the terminal device autonomously performs radio resource selection is determined based on second information;
wherein the second information comprises one or more of the following:
radio environment information;
a size of a buffer in the terminal device, wherein the buffer is used to buffer data to be transmitted; and
service information.

44. The communication device according to claim 43, wherein the radio environment information comprises one or more of the following: congestion status of a radio channel; and a signal-to-noise ratio (SNR).

45. The communication device according to claim 43 or 44, wherein the service information comprises one or more of the following: a data arrival pattern; and a quality of service (QoS) parameter.

46. The communication device according to any one of claims 41 to 45, wherein the data transmitted based on the first radio resource is first data, and in a case where the first data is part of data to be transmitted, the buffer data information indicates information of remaining data of the data to be transmitted.

47. The communication device according to claim 46, wherein a priority of the buffer data information is higher than a priority of the first data.

48. The communication device according to claim 46 or 47, wherein the buffer data information and the first data are multiplexed into a same packet data unit (PDU).

49. The communication device according to any one of claims 46 to 48, wherein the buffer data information comprises one or more of the following:
a size of the remaining data of the data to be transmitted;
a relationship between the remaining data of the data to be transmitted and a logical channel; and
a remaining delay budget of the remaining data of the data to be transmitted.

50. The communication device according to any one of claims 41 to 49, wherein a radio resource used by the terminal device in last data transmission is a second radio resource, and the first radio resource is different from the second radio resource.

51. The communication device according to claim 50, wherein the first radio resource differs from the second radio resource in one or more of the following: time domain, code domain, frequency domain, spatial domain, and power domain.

52. The communication device according to claim 42, wherein the machine learning model comprises a multi-armed bandit (MAB) algorithm.

53. A terminal device, wherein the terminal device comprises a memory and a processor, the memory is configured to store a program, and the processor is configured to invoke the program stored in the memory to cause the terminal device to execute the method according to any one of claims 1 to 14.

54. A communication device, wherein the communication device comprises a memory and a processor, the memory is configured to store a program, and the processor is configured to invoke the program stored in the memory to cause the communication device to execute the method according to any one of claims 15 to 26.

55. A device, wherein the device comprises a processor configured to invoke a program from a memory to cause the device to execute the method according to any one of claims 1 to 26.

56. A chip, wherein the chip comprises a processor configured to invoke a program from a memory to cause a device equipped with the chip to execute the method according to any one of claims 1 to 26.

57. A computer-readable storage medium storing a program thereon, the program being configured to cause a computer to execute the method according to any one of claims 1 to 26.

58. A computer program product, wherein the computer program product comprises a program configured to cause a computer to execute the method according to any one of claims 1 to 26.

59. A computer program, wherein the computer program is configured to cause a computer to execute the method according to any one of claims 1 to 26.
